# EUROPEAN PATENT APPLICATION

(11) **EP 2 194 724 A1**
(43) Date of publication of application: **09.06.2010**
(21) Application number: 09177904.1
(22) Date of filing: 03.12.2009
(51) Int. Cl.: H04N 9/806

(54) **Digital broadcast recording device**

(30) Priority: 05.12.2008 JP 2008310796
(71) Applicant: Funai Electric Co., Ltd., Osaka 574-0013 (JP)
(72) Inventor: Ochi, Hiroshi, Daito-shi, Osaka 574-0013 (JP)
(74) Representative: Grünecker, Kinkeldey, Stockmair & Schwanhäusser Anwaltssozietät

(57) **Abstract**

A digital broadcast recording receives a digital broadcast signal with a main audio signal and a sub audio signal, and records the digital broadcast signal to a recording medium. The digital broadcast recording device includes decision means and recording means. The decision means decides whether or not the recording medium is compatible with a dual mono mode during a PS (Program Stream) recording mode in which the digital broadcast signal is recorded by a PS recording. The recording means records the sub audio signal along with the main audio in a stereo mode when the decision means decides that the recording medium is not compatible with the dual mono mode, and records the sub audio signal and the main audio signal in the dual mono mode when the decision means decides that the recording medium is compatible with the dual mono mode.

## Description

### CROSS-REFERENCE TO RELATED APPLICATIONS

This application claims priority to Japanese Patent Application No. 2008-310796, filed on December 5, 2008. The entire disclosure of Japanese Patent Application No. 2008-310796 is hereby incorporated herein by reference.

### BACKGROUND OF THE INVENTION

### Field of the Invention

The present invention generally relates to a digital broadcast recording device. More specifically, the present invention relates to a digital broadcast recording device with which a digital broadcast signal is received and recorded to a recording medium. Background Information

Digital broadcasts have been rapidly becoming widespread due to the standardization of MPEG (Moving Picture Experts Croup) 2, which is audio/video compression technology.

With MPEG2 standards, there are two different formats. One format is MPEG2-PS (program stream), which deals with recording medium such as DVDs (digital versatile disks) and hard disks and with which a single program (such as a movie or a TV show) is multiplexed. The other format is MPEG2-TS (transport stream), which deals with broadcast communications and with which a plurality of programs are multiplexed. Therefore, a conventional digital broadcast recording device has two different recording systems, one for MPEG2-TS (i.e., TS recording) and one for MPEG2-PS (i.e., PS recording).

With a conventional digital broadcast reception system, a program received by a digital broadcast service is outputted to and recorded and reproduced by a recording device that handles data of different compression formats, such as MPEG2-PS and MPEG2-TS (see Japanese Laid-Open Patent Application No. 119-322148, for example). With the conventional digital broadcast reception system, the outputted data can be edited to the output format compatible with the recording device.

With the terrestrial digital broadcasting in Europe (DVB-T "Digital Video Broadcasting - Terrestrial"), an audio commentary (e.g., audio description) for the visually impaired is mixed with a main audio and outputted as audio for the visually impaired. The main audio is multiplexed with an MPEG2 Audio Layer 2, and the audio description (hereinafter referred to as "AD audio") is multiplexed with the broadcast signal as a stream of MPEG1 Audio Layer 2. Specifically, when the user needs the AD audio, the user mixes the AD audio with the main audio.

Meanwhile, as mentioned above, there are two different recording systems: MPEG2-TS recording and MPEG2-PS recording. In the case of the TS recording, with a Blu-Ray disk compatible with the TS recording or a hard disk with no limitations in terms of standards, even though the main audio and the AD audio are recorded without modification at the recording stage, during reproduction the user can switch between outputting just the main audio, outputting just the AD audio, and mixing the AD audio with the main audio.

In the case of the PS recording, however, if the main audio and the AD audio are recorded at the recording stage, during reproduction the user cannot mix the AD audio with the main audio. This is because the PS recording is set this way by standard (specifically, there is no standard for mixing the main audio and the AD audio). Accordingly, in the case of the PS recording, the main audio and the AD audio have to be mixed and recorded at the recording stage. In this case, however, if the PS recording is performed in normal stereo mode, then during reproduction the user is unable to switch the audio so that only the main audio is heard or only the AD audio is heard.

In view of the above, it will be apparent to those skilled in the art from this disclosure that there exists a need for an improved digital broadcast recording device. This invention addresses this need in the art as well as other needs, which will become apparent to those skilled in the art from this disclosure.

### SUMMARY OF THE INVENTION

The present invention was conceived in light of the above-mentioned problems. One object of the present invention is to provide a digital broadcast recording device with which a digital broadcast signal is adequately recorded by a PS recording so that a main audio signal and a sub audio signal can be adequately switched during reproduction.

In accordance with one aspect of the present invention, a digital broadcast recording receives a digital broadcast signal with a main audio signal and a sub audio signal, and records the digital broadcast signal to a recording medium. The digital broadcast recording device includes decision means and recording means. The decision means decides whether or not the recording medium is compatible with a dual mono mode during a PS (Program Stream) recording mode in which the digital broadcast signal is recorded by a PS recording. The recording means records the sub audio signal along with the main audio in a stereo mode when the decision means decides that the recording medium is not compatible with the dual mono mode, and records the sub audio signal and the main audio signal in the dual mono mode when the decision means decides that the recording medium is compatible with the dual mono mode.

With the digital broadcast recording device of the present invention, it is possible to provide a digital broadcast recording device with which a digital broadcast signal is adequately recorded by a PS recording so that a main audio signal and a sub audio signal can be adequately switched during reproduction.

These and other objects, features, aspects and advantages of the present invention will become apparent to those skilled in the art from the following detailed descriptions, which, taken in conjunction with the annexed drawings, disclose a preferred embodiment of the present invention.

### BRIEF DESCRIPTION OF THE DRAWINGS

Referring now to the attached drawings which form a part of this original disclosure:

FIG. 1 is a functional block diagram of a DVD recorder in accordance with one embodiment of the present invention;

FIG. 2 is a block diagram of a signal processing circuit of the DVD recorder illustrated in FIG. 1;

FIG. 3 is a schematic circuit diagram of the signal processing circuit illustrated in FIG. 2;

FIG. 4a is a schematic circuit diagram of the signal processing circuit in an AD stereo mode;

FIG. 4b is a schematic circuit diagram of the signal processing circuit in an AD dual mono mode; and

FIG. 5 is a flowchart illustrating a recording processing operation when a main audio and an AD audio included in a digital broadcast signal are recorded by a PS recording.

### DETAILED DESCRIPTION OF THE PREFERRED EMBODIMENT

A preferred embodiment of the present invention will now be explained with reference to the drawings. It will be apparent to those skilled in the art from these disclosures that the following descriptions of the preferred embodiment of the present invention are provided for illustration only and not for the purpose of limiting the invention as defined by the appended claims and their equivalents.

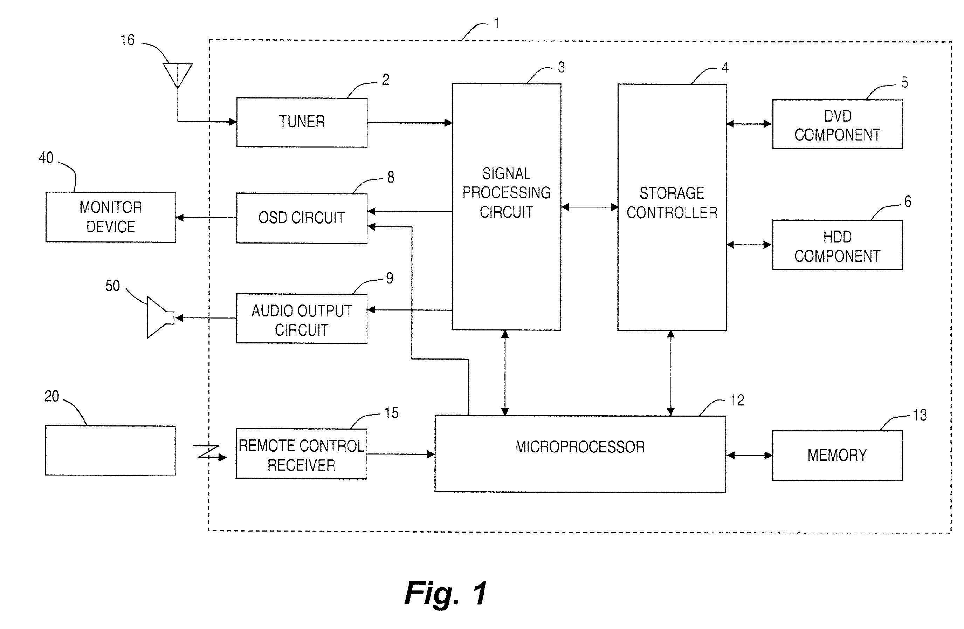

FIG. 1 is a functional block diagram of a DVD recorder (e.g., digital broadcast recording device) 1. The DVD recorder 1 mainly includes a tuner 2, a signal processing circuit 3, a storage controller 4, a DVD component 5, a built-in hard disk drive (HDD) component 6 with a hard disk, an on-screen character display (OSD) circuit 8, an audio output circuit 9, a microprocessor 12, a memory 13, and a remote control receiver 15. The tuner 2 is electrically coupled to an antenna 16, and receives a television broadcast of MPEG compressed digital broadcast signal through the antenna 16. The tuner 2 further receives a program of a channel from the television broadcast. The signal processing circuit 3 processes video and audio signals of the program received by the tuner 2. The DVD component 5 receives the processed video and audio signals via the storage controller 4, records the processed video and audio signals to a DVD or other such optical disk, and reproduces the video signal and the audio signal recorded on the DVD. The HDD component 6 receives the processed video and audio signals via the storage controller 4, records the processed video and audio signals to the hard disk, and reproduces data recorded on the hard disk. The storage controller 4 is operatively coupled to the signal processing circuit 3, the DVD component 5 and the HDD component 6, and controls the recording and reproduction of the DVD component 5 and the HDD component 6. The OSD circuit 8 is electrically coupled to a monitor device 40, and displays character information signal superposed with the video signal on the monitor device 40. The audio output circuit 9 is electrically coupled to a speaker 50, and amplifies the audio signal and drives the speaker 50. The microprocessor 12 controls the entire system of the DVD recorder 1. The memory 13 includes an EEPROM or flash memory. The memory 13 stores various kinds of data. The remote control receiver 15 receives an infrared remote control signal sent from a remote control 20 and converts it into a specific electrical signal.

With the terrestrial digital broadcasting in Europe (DVB-T "Digital Video Broadcasting - Terrestrial"), when a user listens to an audio commentary (e.g., sub audio signal, or sub-audio description (hereinafter "AD audio")) for the visually impaired, a main audio (e.g., main audio signal) of the program and the AD audio of the program have to be mixed. In particular, the monaural AD audio has to be mixed with the stereo main audio. With the conventional device, when the audio signal is subjected to the PS recording to a DVD, HDD, or other storage medium, the user can not switch the recorded audio signal between "with AD audio" (the main audio and the AD audio), "without AD audio" (the main audio only), and "only the AD audio." However, with the DVD recorder 1, the audio signal is subjected to dual mono mode recording only during the PS recording, and then dual mono reproduction of the PS recording is employed during reproduction. As a result, the user can switch between the main audio and the AD audio during reproduction. Here, the dual mono mode is a mode in which two types of monophonic audio (e.g., the main audio and the AD audio) are simultaneously recorded (to the left and right channel) is permitted as a mode for audio recording.

Specifically, in the case of the PS recording (e.g., PS recording mode), if the recording medium is not compatible with the dual mono mode (such as when the recording medium is one of DVD-R in video mode, DVD-RW in video mode (e.g., DVD-Video format, or video mode), DVD+R in +VR mode and DVD+RW in +VR mode (e.g., DVD+VR format)), the dual mono mode recording can not be performed. Thus, in this case stereo mode recording is performed. Specifically, the main audio is recorded in stereo mode to the left and right channels, and the AD audio is also recorded in stereo mode at the same time by multiplexing to the left and right channels. Therefore, in this case switching between the main audio and the AD audio during reproduction can not be performed.

On the other hand, in the case of the PS recording mode, if the recording medium is compatible with the dual mono mode (such as when the recording medium is one of the HDD, DVD-R in VR (Video Recording) mode and DVD-RW in VR mode (e.g., DVD-VR)), the AD audio is recorded, for example, to the left channel, and the stereo main audio is recorded monaurally to the right channel. Consequently, during reproduction the left and right channels are both reproduced so that the main audio and the AD audio can be mixed in the output audio. Furthermore, when just the left channel is reproduced, then just the AD audio can be outputted. Moreover, when just the right channel is reproduced, then just the main audio can be outputted (in this case, however, the reproduction is monaural).

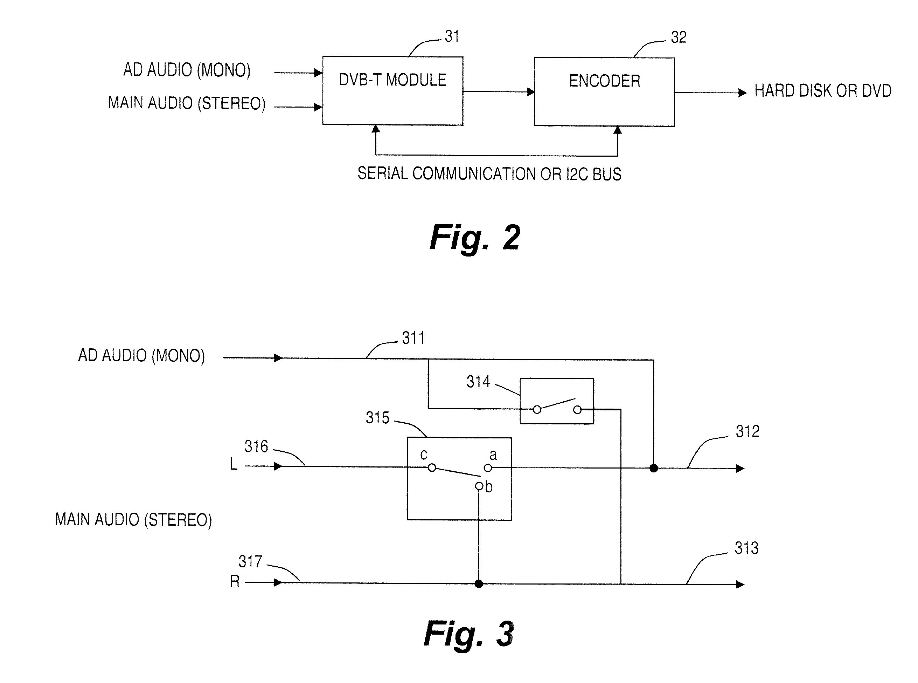

FIG. 2 is a block diagram of an internal configuration of the signal processing circuit 3. FIG. 2 mainly shows an audio signal processing portion of the signal processing circuit 3. The processing of the video signal is the same as in the conventional device, so it is not depicted or described here.

As shown in FIG. 2, the signal processing circuit 3 has a DVB-T module 31 and an encoder 32. The DVB-T module 31 receives the video and audio signals that have undergone MPEG compression. Specifically, as shown in FIG. 2, The DVB-T module 31 receives the monaural AD audio and the stereo main audio from the signal of the video and audio data of the program received by the tuner 2. The encoder 32 encodes the video and audio signals to MPEG-PS. For the audio signal, mixing of the main audio and AD audio that have been received is performed by the DVB-T module 31, and the function of the encoder 32 is to encode the mixed audio signal. The DVB-T module 31 is electrically connected to the encoder 32 so that I/F communication between DVB-T module 31 and the encoder 32 can be performed. In particular, the encoder 32 instructs to the DVB-T module 31 a method for mixing the audio signal. Specifically, the encoder 32 sends to the DVB-T module 31 state information and disk information by the I/F communication. The state information indicates a state in which the received video and audio signals are outputted without modification to the monitor device 40 (e.g., whether or not EE video is outputted), or a recording state (e.g., which of the PS recording mode and the TS recording mode is performed or selected). The disk information indicates whether or not the recording medium to be recorded to is a hard disk drive (e.g., HDD component 6), whether or not the recording medium to be recorded to is a DVD, and whether or not the DVD serving as the recording medium is compatible with the dual mono mode. Here, the I/F communication is performed by a serial communication or an 12C bus.

With the DVD recorder 1, the signal processing circuit 3 (e.g., the DVB-T module 31, the encoder 32) serves as decision means for deciding whether or not the recording medium to be recorded to is compatible with the dual mono mode during the PS recording mode in which the digital broadcast signal including the AD audio is recorded by the PS recording. The DVD component 5 and the HDD component 6 serve as recording means for recording the AD audio along with the main audio in stereo mode when the result of the decision by the signal processing circuit 3 (e.g., the decision means) is that the recording medium is not compatible with the dual mono mode, and recording the AD audio and the main audio in the dual mono mode when the recording medium is compatible with the dual mono mode. Specifically, if the recording medium is compatible with the dual mono mode, the AD audio and the main audio are recorded in the dual mono mode, which allows the user to switch the audio output during reproduction.

FIG. 3 is a schematic circuit diagram of the signal processing circuit 3. In particular, FIG. 3 shows circuit configuration for mixing the audio signal inside the DVB-T module 31. Specifically, the DVB-T module 31 includes an AD signal line (e.g., first input line) 311, a pair of left and right channel signal line (e.g., first and second output lines) 312 and 313, an on/off switch (e.g., first switch) 314, a switch (e.g., second switch) 315, a pair of left and right channel main signal lines (second and third input lines) 316 and 317. The AD signal line 311 receives the monaural AD audio from the tuner 2. The left channel main signal line 316 receives the left channel of the stereo main audio (e.g., first channel of the main audio signal) from the tuner 2. The right channel main signal line 317 receives the right channel of the stereo main audio (e.g., second channel of the main audio signal) from the tuner 2. The AD signal line 311 is electrically connected to the left channel signal line 312 on an output side of the DVB-T module 31. The on/off switch 314 is disposed between the AD signal line 311 and the right channel signal line 313. Specifically, an input terminal of the on/off switch 314 is electrically connected to the AD signal line 311, and an output terminal of the on/off switch 314 is electrically connected to the right channel signal line 313. The switch 315 is disposed between the left channel main signal line 316 and the left and right channel signal line 312 and 313. The switch 315 has a common terminal c and a pair of first and second switching terminals a and b. The switch 315 selectively connects the common terminal c to the first and second switching terminals a and b. The left channel main signal line 316 is electrically connected to the common terminal c of the switch 315. The right channel main signal line 317 is electrically connected to the right channel signal line 313. The first switching terminal a of the switch 315 is electrically connected to the left channel signal line 312. The second switching terminal b of the switch 315 is electrically connected to the right channel signal line 313. The DVB-T module 31 selectively switches the on/off switch 314 and the switch 315 as directed by the encoder 32 (e.g., based on the state information and the disk information), thereby mixing the AD audio and the main audio that are received from the AD signal line 311 and the left and right channel main signal lines 316 and 317, respectively, and outputting the left and right channels of the audio signal from the left and right channel signal lines 312 and 313, respectively.

Specifically, the on/off switch 314 electrically connects the AD signal line 311 to the right channel signal line 313 when the DVB-T module 31 decides that the recording medium is not compatible with the dual mono mode. Furthermore, the on/off switch 314 electrically disconnects the AD signal line 311 and the right channel signal line 313 when the DVB-T module 31 decides that the recording medium is compatible with the dual mono mode. The switch 315 electrically connects the left channel main signal line 316 to the left channel signal line 312 when the DVB-T module 31 decides that the recording medium is not compatible with the dual mono mode. Furthermore, the switch 315 electrically connects the left channel main signal line 316 to the right channel signal line 313 when the DVB-T module 31 decides that the recording medium is compatible with the dual mono mode. Thus, the DVB-T module 31 serves as mixing means for mixing the AD audio with the left and right channels of the main audio signal, respectively, when the DVB-T module 31 decides that the recording medium is not compatible with the dual mono mode, and mixing the left channel and the right channel of the main audio when the DVB-T module 31 decides that the recording medium is compatible with the dual mono mode.

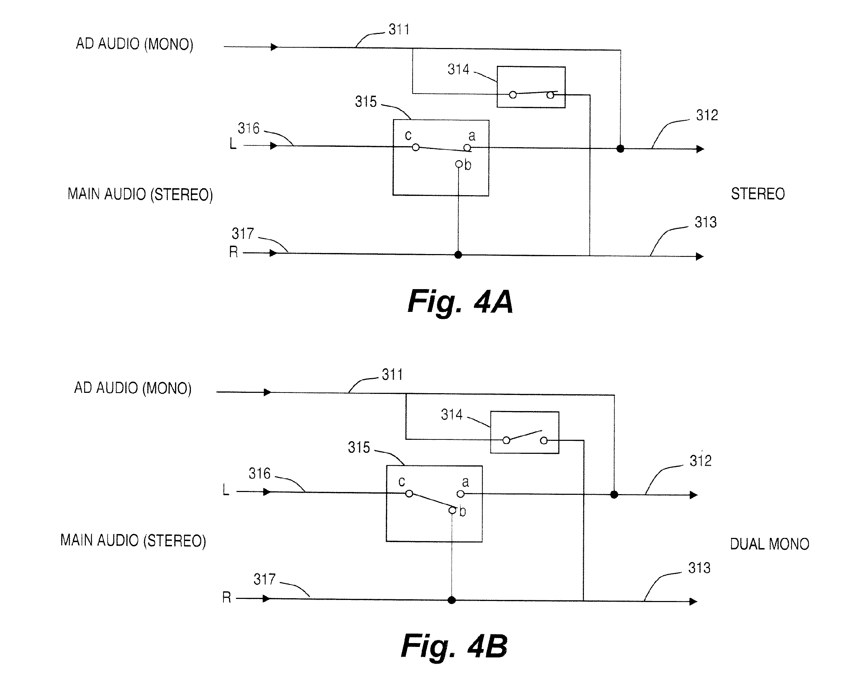

Specifically, the disk information from the encoder 32 indicates that the recording medium is not compatible with the dual mono mode, then as shown in FIG. 4a, the on/off switch 314 is turned on, and the switch 315 enters an AD stereo mode in which the common terminal c is connected to the first switching terminal a. On the other hand, if the disk information from the encoder 32 indicates that the recording medium is compatible with the dual mono mode, then as shown in FIG. 4b, the on/off switch 314 is turned off, and the switch 315 enters an AD dual mono mode in which the common terminal c is connected to the switching terminal b.

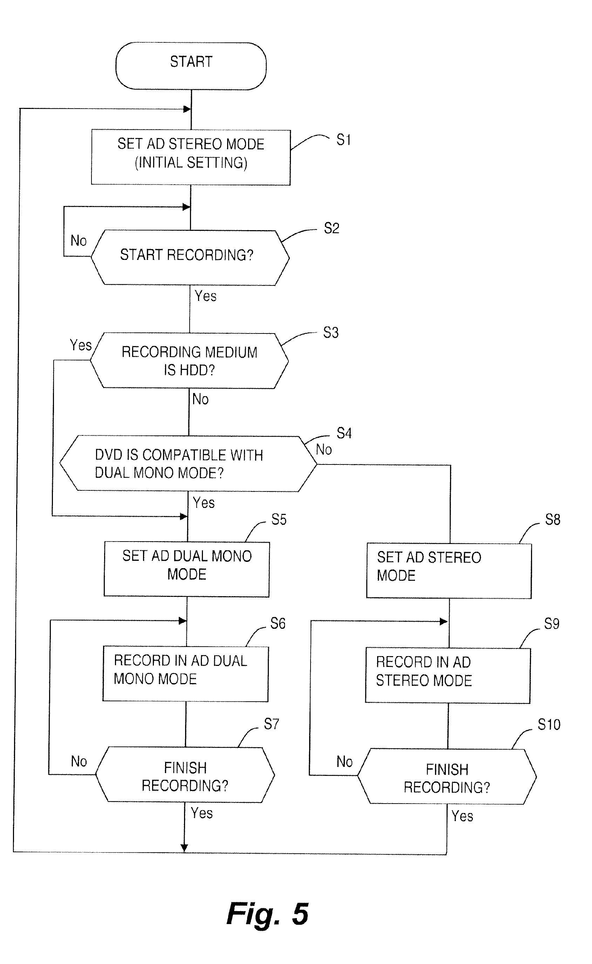

Next, we will describe the recording processing operation in the DVD recorder 1 when the main audio and the AD audio included in the received digital broadcast signal are recorded by the PS recording, through reference to FIGS. 4a, 4b and 5.

At an initial setting for the recording processing operation of the audio signal, the mode is set to the AD stereo mode (step S1). Specifically, the on/off switch 314 and the switch 315 are set in the state shown in FIG. 4a. Consequently, the left and right channels of the main audio inputted from the left and right channel main signal lines 316 and 317 are outputted from the left and right channel signal lines 312 and 313, respectively. Furthermore, the AD audio inputted from the AD signal line 311 is outputted from the left and right channel signal lines 312 and 313. As a result, the main audio is recorded in stereo to the left and right channels, and the AD audio is also recorded at the same time in stereo by multiplexing to the left and right channels.

In the initial state, when the record button (not shown) on the remote control 20 is pressed to start the PS recording ("Yes" in step S2), the DVB-T module 31 decides, based on the disk information from the encoder 32, whether or not the recording medium to be recorded to is a hard disk drive (e.g., HDD component 6) (step S3). If the DVB-T module 31 decides that the recording medium is a hard disk drive ("Yes" in step S3), then the operation moves to step S5 and the mode is set to the AD dual mono mode. Specifically, the on/off switch 314 and the switch 315 are set in the state shown in FIG. 4b. In particular, the on/off switch 314 is turned off, and the switch 315 enters the AD dual mono mode in which the common terminal c is connected to the switching terminal b. Consequently, the left and right channels of the main audio inputted from the left and right channel main signal lines 316 and 317 are mixed and outputted from the right channel signal line 313. Furthermore, the AD audio inputted from the AD signal line 311 is outputted from the left channel signal line 312. As a result, the AD audio is recorded to the left channel, and the stereo main audio is recorded monaurally to the right channel (that is, the left and right channels of the main audio is mixed to the right channel (L+R)) (step S6). After this, when the PS recording is complete ("Yes" in step S7), the system is returned to the initial setting state of step S1.

On the other hand, if the DVB-T module 31 decides that the recording medium is not a hard disk drive ("No" in step S3), then the operation moves to step S4. Then, the DVB-T module 31 decides, based on the disk information from the encoder 32, whether or not the recording medium is a DVD and is compatible with the dual mono mode (step S4). If the DVD is a DVD-R/RW in VR format that is compatible with the dual mono mode ("Yes" in step S4), then the operation moves to step S5 and the mode is set to the AD dual mono mode. Specifically, the on/off switch 314 and the switch 315 are set in the state shown in FIG. 4b. In particular, the on/off switch 314 is turned off, and the switch 315 enters the AD dual mono mode in which the common terminal c is connected to the switching terminal b. Consequently, the left and right channels of the main audio inputted from the left and right channel main signal lines 316 and 317 are mixed and outputted from the right channel signal line 313. Furthermore, the AD audio inputted from the AD signal line 311 is outputted from the left channel signal line 312. As a result, the AD audio is recorded to the left channel, and the stereo main audio is recorded monaurally to the right channel (step S6). As a result, during reproduction, the AD audio can be mixed with the main audio for output by reproducing both the left and right channels as a dual mono reproduction of the PS recording. Also, if just the left channel is reproduced, then just the AD audio can be outputted. Furthermore, if just the right channel is reproduced, then just the main audio can be outputted (The main audio is monaurally reproduced). After this, when the PS recording is complete ("Yes" in step S7), the system is returned to the initial setting state of step S1.

On the other hand, if the DVB-T module 31 decides that the DVD is not compatible with the dual mono mode ("No" in step S4) (that is, if the DVD is a DVD-R/RW in video mode, a DVD+R/RW in +VR, etc.), then the recording is impossible in the dual mono mode. Thus, in this case the operation moves to step S8, and the mode is set to the AD stereo mode. Specifically, the on/off switch 314 and the switch 315 are set in the state shown in FIG. 4a. Specifically, the on/off switch 314 is turned on, and the switch 315 enters the AD stereo mode in which the common terminal c is connected to the switching terminal a. Consequently, the left and right channels of the main audio inputted from the left and right channel main signal lines 316 and 317 are outputted from the left and right channel signal lines 312 and 313, respectively. Furthermore, the AD audio inputted from the AD signal line 311 is outputted from the left and right channel signal lines 312 and 313. As a result, the main audio is recorded in stereo to the left and right channels, and the AD audio is also recorded at the same time in stereo by multiplexing to the left and right channels (step S9). After this, when the PS recording is complete ("Yes" in step S10), the system is returned to the initial setting state of step S1.

With the DVD recorder 1, even in the PS recording mode, when the recording medium is compatible with the dual mono mode, the AD audio and the main audio can be recorded in the dual mono mode. Thus, the user can switch the audio output during reproduction between just the AD audio, just the main audio, and a stereo audio in which the AD audio is mixed with the main audio.

As shown in FIG. 1, the DVD recorder 1 includes the built-in hard disk drive (HDD) component 6. However, a DVD recorder without a hard disk drive can also perform the above-mentioned recording processing operation when the DVD recorder has the same components as the DVD recorder 1 shown in FIG1 except the HDD component 6 (that is, the DVD recorder does not have the HDD component 6). Furthermore, the DVD recorder performs the same recording processing operation as shown in FIG. 5 except step S3 (that is, the recording processing operation does not have step S3 of FIG. 5). Moreover, a hard disk drive recorder (HDD recorder) without a DVD component can also perform the above-mentioned recording processing operation when the HDD recorder has the same components as the DVD recorder 1 shown in FIG1 except the DVD component 5 (that is, the HDD recorder does not have the DVD component 5). Furthermore, the HDD recorder performs the same recording processing operation as shown in FIG. 5 except steps S3, S4, and S8-S10 (that is, the recording processing operation does not have steps S3, S4 and S8-S 10 of FIG. 5, and merely performs steps S1, S2, and S5-S7).

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Terms that are expressed as "means-plus function" in the claims should include any structure that can be utilized to carry out the function of that part of the present invention.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims and their equivalents.

## Claims

1. A digital broadcast recording device for receiving a digital broadcast signal with a main audio signal and a sub audio signal, and recording the digital broadcast signal to a recording medium, the digital broadcast recording device comprising:
decision means for deciding whether or not the recording medium is compatible with a dual mono mode during a PS (Program Stream) recording mode in which the digital broadcast signal is recorded by a PS recording; and
recording means for recording the sub audio signal along with the main audio signal in a stereo mode when the decision means decides that the recording medium is not compatible with the dual mono mode, and recording the sub audio signal and the main audio signal in the dual mono mode when the decision means decides that the recording medium is compatible with the dual mono mode.

2. The digital broadcast recording device according to claim 1, wherein
the decision means decides that the recording medium is not compatible with the dual mono mode when the recording medium is one of a DVD-R in video mode, a DVD-RW in video mode, a DVD+R in +VR mode and a DVD+RW in +VR mode, and decides that the recording medium is compatible with the dual mono mode when the recording medium is one of a DVD-R in VR mode and a DVD-RW in VR mode.

3. The digital broadcast recording device according to any one of claims 1 or 2, wherein
the sub audio signal includes an audio commentary signal.

4. The digital broadcast recording device according to any one of claims 1 to 3, wherein
the decision means further decides whether or not the recording medium is a hard disk before deciding whether or not the recording medium is compatible with the dual mono mode, and
the recording means further records the sub audio signal and the main audio signal in the dual mono mode when the decision means decides that the recording medium is the hard disk.

5. The digital broadcast recording device according to any one of claims 1 to 4, further comprising
mixing means for mixing the sub audio signal with first and second channels of the main audio signal, respectively, when the decision means decides that the recording medium is not compatible with the dual mono mode, and mixing the first channel of the main audio signal and the second channel of the main audio signal when the decision means decides that the recording medium is compatible with the dual mono mode.

6. The digital broad cast recording device according to claim 5, wherein the mixing means includes
first to third input lines that receive the sub audio signal and the first and second channels of the main audio signal, respectively,
first and second output lines that output the sub audio signal and the main audio signal to the recording means, the first output line being electrically connected to the first input line, the second output line being electrically connected to the third input line,
a first switch that is disposed between the first input line and the second output line, the first switch electrically connecting the first input line to the second output line when the decision means decides that the recording medium is not compatible with the dual mono mode, the first switch electrically disconnecting the first input line and the second output line when the decision means decides that the recording medium is compatible with the dual mono mode, and
a second switch that is disposed between the second input line and the first and second output lines, the second switch electrically connecting the second input line to the first output line when the decision means decides that the recording medium is not compatible with the dual mono mode, the second switch electrically connecting the second input line to the second output line when the decision means decides that the recording medium is compatible with the dual mono mode.

7. A digital broadcast recording method for receiving a digital broadcast signal with a main audio signal and a sub audio signal, and recording the digital broadcast signal to a recording medium, the digital broadcast recording method comprising:
deciding whether or not the recording medium is compatible with a dual mono mode during a PS (Program Stream) recording mode in which the digital broadcast signal is recorded by a PS recording;
recording the sub audio signal along with the main audio signal in a stereo mode upon deciding that the recording medium is not compatible with the dual mono mode; and
recording the sub audio signal and the main audio signal in the dual mono mode upon deciding that the recording medium is compatible with the dual mono mode.
